# FASCICULE DE BREVET EUROPEEN

(11) **EP 3 625 579 B1**
(45) Date de publication et mention de la délivrance du brevet: **02.08.2023**
(21) Numéro de dépôt: 18735360.2
(22) Date de dépôt: 17.05.2018
(51) Int. Cl.: G01R 31/3183, G01R 31/319

(54) **APPAREIL DE TEST ET PROCEDE DE TEST D'UN CIRCUIT INTEGRE**
TESTVORRICHTUNG UND -VERFAHREN FÜR INTEGRIERTE SCHALTUNGEN
INTEGRATED CIRCUIT TEST APPARATUS AND METHOD

(30) Priorité: 19.05.2017 FR 1754491
(43) Date de publication de la demande: 25.03.2020
(73) Titulaire: Institut Polytechnique de Grenoble, 38000 Grenoble (FR)
(72) Inventeur: PORTOLAN, Michele, 38134 Saint Julien De Ratz (FR)
(74) Mandataire: Cabinet Chaillot
(86) Numéro de dépôt international: PCT/FR2018/051182
(87) Numéro de publication internationale: WO 2018/211218

(56) Documents cités:
- US-A- 5 778 004
- US-A1- 2001 049 805
- US-B1- 6 760 904

## Description

### Domaine de l'invention

La présente description concerne le domaine du test de circuits intégrés, et en particulier le test numérique automatisé.

### Exposé de l'art antérieur

Dans le domaine du test numérique automatisé, pendant de nombreuses années la norme IEEE 1149.1, appelée communément norme JTAG (de l'anglais Joint Test Action Group), a défini l'interface de test à utiliser pour tester des circuits intégrés. Toutefois, avec les évolutions de ces dernières années dans la technologie des circuits, comme les systèmes sur une puce (SoC de l'anglais Systems-on-Chip) et la technologie d'intégration 3D, il est devenu nécessaire d'ajouter des capacités pour permettre un test approprié.

Parmi les efforts pour faire avancer les capacités de test, une nouvelle norme IEEE 1687-2014 a été développée, appelée communément IJTAG (Internal JTAG) et publiée sous le titre "IEEE Standard for Access and Control of Instrumentation Embedded within a Semiconductor Device", IEEE, USA, 2014. Par rapport à la norme IEEE 1149.1, cette nouvelle norme introduit deux évolutions notables :
- des chaînes d'analyse à longueur dynamique ; et
- l'utilisation d'instruments par l'intermédiaire d'une chaîne JTAG.

Bien que les experts aient prêté attention au domaine des possibilités permises par des chaînes d'analyse à longueur dynamique, relativement peu de travaux se sont focalisés sur les possibilités d'accès à des instruments. En fait, un accès fonctionnel réel à des instruments est incompatible avec les flux de test courants basés sur la génération de motifs de tests automatisés (ATPG) (de l'anglais Automated Test Pattern Génération). On connaît, des documents US 2001/049805 A1, US 5 778 004 A et US 6 760 904 B1, des appareils et procédés de test adaptés pour convertir un ensemble de données de test en une représentation spécifique. Or, ces documents sont entièrement silencieux concernant la transmission et conversion d'un code de test définissant un ou plusieurs motifs de test et un ou plusieurs algorithmes de test à appliquer à des instruments de test du dispositif sous test.

On a donc besoin dans la technique d'une solution pour générer et appliquer des tests à un circuit intégré qui inclue l'accès à des instruments dans une chaîne JTAG.

Une autre difficulté dans le domaine du test automatisé est que, avec la miniaturisation continuelle des éléments de circuits, la densité des circuits augmente, et les chaînes de test incorporées dans le circuit intégré deviennent de plus en plus complexes. Cela peut provoquer une augmentation du temps nécessaire à l'exécution d'un test automatisé. En outre, l'interface d'accès effective au circuit est souvent décidée au tout dernier moment, ce qui oblige les ATPG classiques à réaliser des opérations de conversion complexes. Il existe donc un besoin supplémentaire de fournir un appareil et un procédé de test permettant une exécution rapide d'une séquence de test automatisée.

### Résumé

Un objet de modes de réalisation de la présente description est de résoudre au moins partiellement un ou plusieurs problèmes de l'art antérieur.

Selon un aspect, on prévoit un appareil de test pour tester un dispositif sous test, l'appareil comprenant : un dispositif de test comportant une mémoire mémorisant des instructions informatiques et un ou plusieurs processeurs agencés, lors de l'exécution des instructions informatiques : pour exécuter du code de test pour mettre en oeuvre une opération de test sur le dispositif sous test, le code de test définissant un ou plusieurs motifs de test et un ou plusieurs algorithmes de test à appliquer à des instruments de test du dispositif sous test, le code de test étant dans un premier format qui est indépendant de l'interface de test entre le dispositif de test et le dispositif sous test ; et un pilote d'interface couplé au dispositif sous test et agencé pour convertir des communications générées par le dispositif de test pendant l'exécution du code de test dans un deuxième format adapté à l'interface de test, et pour convertir des communications provenant du dispositif sous test dans le premier format.

Selon un mode de réalisation, l'appareil de test comprend une pluralité de pilotes d'interface mis en oeuvre par lesdits un ou plusieurs processeurs du dispositif de test ou par un autre dispositif, le dispositif de test étant agencé pour sélectionner l'un de la pluralité de pilotes d'interface pour réaliser la conversion.

Selon un mode de réalisation, lesdits un ou plusieurs processeurs du dispositif de test, ou un ou plusieurs autres processeurs d'un outil de génération de test, sont agencés pour générer le code de test avant l'exécution du code de test par le dispositif de test.

Selon un mode de réalisation, l'appareil de test comprend en outre l'interface de test couplant le pilote d'interface au dispositif sous test.

Selon un mode de réalisation, le dispositif de test est agencé pour réaliser une exécution en parallèle d'un premier algorithme de test appliqué à un premier des instruments de test et un deuxième algorithme de test appliqué à un deuxième des instruments de test.

Selon un mode de réalisation, lesdits un ou plusieurs processeurs du dispositif de test sont en outre agencés pour accéder à une librairie externe définissant un ou plusieurs autres algorithmes de test pour tester un sous-circuit du dispositif sous test.

Selon un mode de réalisation, lesdits un ou plusieurs processeurs du dispositif de test sont agencés pour générer le code de test en incorporant la librairie externe dans le code de test et/ou en incorporant dans le code de test un appel de fonction auxdits un ou plusieurs autres algorithmes de test.

Selon un mode de réalisation, le sous-circuit met en oeuvre une fonction de traitement de signal ou de données, et lesdits un ou plusieurs autres algorithmes de test sont agencés pour vérifier un comportement attendu de la fonction de traitement de signal ou de données.

Selon un mode de réalisation, le sous-circuit met en oeuvre une fonction cryptographique, et lesdits un ou plusieurs autres algorithmes de test sont agencés pour assurer des opérations de chiffrement et/ou de déchiffrement afin de permettre à l'outil de génération de test de vérifier le comportement de la fonction cryptographique.

Selon un autre aspect, on prévoit un système de test comprenant l'appareil de test susmentionné et le dispositif sous test couplé à l'appareil de test, le dispositif sous test comprenant un port d'accès de test et une pluralité d'instruments de test, chaque instrument de test comprenant un ou plusieurs registres d'analyse.

Selon un autre aspect, on prévoit un procédé de test d'un dispositif sous test, le procédé comprenant : exécuter, par un dispositif de test comportant une mémoire mémorisant des instructions informatiques et un ou plusieurs processeurs agencés, du code de test pour mettre en oeuvre une opération de test sur le dispositif sous test, le code de test définissant un ou plusieurs motifs de test et un ou plusieurs algorithmes de test à appliquer aux instruments de test du dispositif sous test, le code de test étant dans un premier format qui est indépendant de l'interface de test entre l'outil de génération de test et le dispositif sous test ; et pendant l'opération de test : convertir des communications générées par l'exécution du code de test et destinées au dispositif sous test dans un deuxième format adapté à l'interface de test ; et convertir des communications provenant du dispositif sous test dans le premier format.

Selon un mode de réalisation, le procédé comprend en outre, avant l'exécution du code de test, la génération du code de test par le dispositif de test, ou par un ou plusieurs autres processeurs d'un outil de génération de test.

Selon un mode de réalisation, le procédé comprend en outre la mise en oeuvre par lesdits un ou plusieurs processeurs du dispositif de test, et la sélection, par le dispositif de test, de l'un d'une pluralité de pilotes d'interface pour réaliser lesdites conversions.

Selon un mode de réalisation, le procédé comprend en outre la réalisation par le dispositif de test d'une exécution en parallèle d'un premier algorithme de test appliqué à un premier des instruments de test et d'un deuxième algorithme de test appliqué à un deuxième des instruments de test.

### Brève description des dessins

Ces objets, caractéristiques et avantages, ainsi que d'autres, seront exposés en détail dans la description suivante de modes de réalisation particuliers faite à titre illustratif et non limitatif en relation avec les figures jointes parmi lesquelles :
la figure 1 illustre schématiquement un ATPG typique ;
la figure 2 illustre schématiquement plus en détail un circuit intégré de la figure 1 comprenant un dispositif sous test ;
les figures 3A et 3B illustrent schématiquement un appareil de test selon un exemple de réalisation de la présente description ;
la figure 4 est un organigramme illustrant des étapes dans un procédé d'application d'un test automatique à un circuit intégré ;
les figures 5A à 5D illustrent schématiquement différentes applications de l'appareil de test des figures 3A et 3B selon des exemples de réalisation de la présente description ;
la figure 6 illustre schématiquement un outil de génération de test selon un autre exemple de réalisation ;
la figure 7A illustre schématiquement la portion de l'appareil de test de la figure 3B adaptée à tester une fonction FFT (transformation de Fourier rapide) selon un exemple de réalisation de la présente description ; et
la figure 7B illustre schématiquement la portion de l'appareil de test de la figure 3B adaptée à tester une fonction cryptographique selon un exemple de réalisation de la présente description.

### Description détaillée

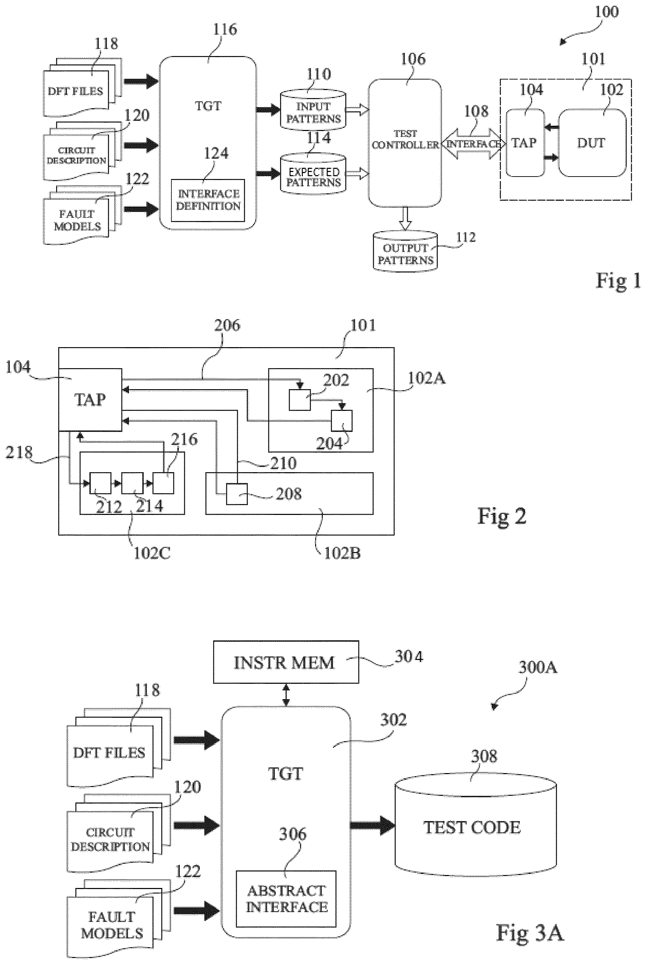

La figure 1 illustre schématiquement un appareil de test 100 qui a été proposé sur la base de la norme IJTAG.

Un circuit intégré 101 comprend par exemple un dispositif sous test (DUT) 102, accédé par l'intermédiaire d'un port d'accès de test (TAP) 104. Dans l'exemple de la figure 1, le TAP 104 est intégré dans la même puce que le DUT 102, mais dans des variantes de réalisation ce pourrait être une puce séparée.

Le TAP 104 communique par exemple avec un contrôleur de test (TEST CONTROLLER) 106 par l'intermédiaire d'une interface de test (INTERFACE) 108. Le contrôleur de test 106 exécute une séquence de test dans le DUT 102 sur la base de motifs de test (INPUT PATTERNS) 110, qui sont chargés dans le DUT 102 par l'intermédiaire du TAP 104. Par exemple, les motifs de test sont des séquences de bits qui sont chargées dans une instrumentation de test incorporée dans le DUT 102, par exemple en utilisant une opération d'analyse par la frontière en utilisant le langage de description d'analyse par la frontière BDSL (Boundary Scan Description Language). Cela implique par exemple le chargement d'une configuration fonctionnelle dans le DUT 102 en programmant des registres d'analyse sur la base des motifs de test, puis en permettant au DUT 102 de fonctionner pendant un ou plusieurs cycles d'horloge, avant de récupérer les bits de données modifiés dans les registres d'analyse. Les bits de données modifiés sont ensuite fournis au contrôleur de test pour générer des motifs de test de sortie (OUTPUT PATTERNS) 112, qui sont par exemple comparés par le contrôleur de test 106 à des motifs de tests attendus (EXPECTED PATTERNS) 114. S'il y a une concordance entre les motifs de test de sortie 112 et les motifs de test attendus 114, cela signifie que le test a été exécuté avec succès. Les motifs sont parfois appelés dans la technique "vecteurs", et dans la présente description les deux termes sont utilisés comme synonymes.

Les motifs de test d'entrée 110 et les motifs de test attendus 114 sont générés par un outil de génération de test (TGT) 116 sur la base de divers fichiers d'entrée. Par exemple, le TGT 116 reçoit des fichiers DfT (Design for Test) (DFT FILES) 118, des fichiers de description de circuit (CIRCUIT DESCRIPTION) 120, et des modèles de défauts (FAULT MODELS) 122. Les fichiers DfT 118 définissent par exemple les instruments de test incorporés dans le DUT 102, qui peuvent inclure des bascules/registres d'analyse, des autotests intégrés, BIST (Built-In Self Tests), accessibles pendant un test d'analyse, etc. La description de circuit 120 définit par exemple les composants de circuit du DUT 102, par exemple sous la forme d'une liste de connexions. Les modèles de défauts indiquent par exemple les défauts potentiels qui peuvent survenir dans la conception de circuit, de sorte que les motifs de test peuvent être générés pour couvrir de façon effective ces défauts.

Dans l'exemple de la figure 1, le TGT 116 a aussi connaissance de l'interface de test (INTERFACE DEFINITION) 124 mise en oeuvre entre le TGT 116 et le DUT 102. Dans l'exemple de la figure 1, cette interface est une interface JTAG par l'intermédiaire du contrôleur de test 106.

La figure 2 illustre schématiquement le circuit intégré 101 plus en détail selon un exemple de réalisation. Dans cet exemple, le circuit intégré 101 comprend, en plus du TAP 104, trois blocs de circuits 102A, 102B, 102C formant le DUT 102. Le bloc de circuit 102A comprend par exemple des instruments de test 202 et 204 reliés au TAP 104 par une chaîne d'analyse 206, le bloc de circuit 102B comprend par exemple un instrument de test 208 relié au TAP 104 par une chaîne d'analyse 210, et le bloc de circuit 102C comprend par exemple des instruments de test 212, 214 et 216 reliés au TAP 104 par une chaîne d'analyse 218.

En faisant maintenant référence aux figures 1 et 2, afin d'appliquer des tests à chaque instrument de test 202 à 216, le langage de définition procédural PDL (Procedural Définition Language) est par exemple utilisé par le TGT 116 pour envelopper des vecteurs de test et permettre leur application par le contrôleur de test 106. Les vecteurs enveloppés par PDL peuvent être planifiés et fusionnés par le TGT 116, afin de minimiser la durée du test.

La norme IJTAG 1687 envisage aussi une interaction plus avancée avec l'instrumentation de test pendant le test. En particulier, la norme IJTAG propose un usage fonctionnel, dans lequel des instruments bruts peuvent être décrits, et le PDL peut être défini au niveau des frontières de ces instruments. En particulier, le langage PDL définit des valeurs au niveau des entrées/sorties des instruments, qui sont ensuite composées pour obtenir un vecteur de niveau supérieur puis une séquence d'opérations d'interface. Cela est connu communément dans la technique sous le nom de "reciblage". Le langage PDL le plus simple de niveau 0 décrit par exemple des opérations de vecteurs d'entrée/sortie (I/O), alors que le langage PDL de niveau 1 introduit des primitives d'interface de données qui peuvent être utilisées pour interfacer les instruments avec des algorithmes écrits par exemple dans le langage de programmation dynamique Tcl.

Cependant, dans l'exemple de la figure 1, le TGT 116 est agencé pour générer les motifs de test d'entrée 110 et les motifs de test attendus 114 dans une seule étape. Une fois ceux-ci générés, le TGT 116 n'est plus impliqué dans le processus de test, et le contrôleur de test met en oeuvre le test sur la base du fichier PDL en appliquant les motifs de test au DUT par l'intermédiaire du contrôleur de test 106. Ainsi, le flux du test va dans un seul sens, du TGT 116 vers le DUT, et il n'y a pas de chemin de retour vers le TGT 116 permettant d'exécuter des algorithmes qui évoluent sur la base de signaux revenant du DUT.

En fait, dans l'exemple de la figure 1, la génération du test et l'application du test sont deux étapes différentes dans le développement du produit, généralement réalisées par des équipes différentes à des emplacements différents et à des moments différents. Par conséquent, le TGT 116 peut même ne pas être disponible lorsque le contrôleur de test 106 applique les motifs d'entrée 110.

En outre, le Tcl est intrinsèquement séquentiel, et donc il est difficile et lourd en calcul d'assurer une simultanéité entre les tests de différents instruments, ce qui rend difficile l'exécution en parallèle d'algorithmes de test dans chaque instrument.

Une autre difficulté est que, même si le TGT 116 était autorisé à recevoir des motifs de données revenant du DUT 102 et à exécuter un algorithme pour modifier dynamiquement les motifs de test d'entrée 110 pendant une phase de test du DUT 102, un tel processus de test serait lent et complexe, puisque le TGT 116 devrait interpréter les motifs de sortie sur la base de l'interface particulière utilisée entre le TGT 116 et le DUT 102, et devrait prendre en compte la définition d'interface 124 lors de la détermination de la façon de modifier les motifs de test. En outre, l'exécution simultanée par le TGT 116 de plusieurs algorithmes de test serait lente puisque le TGT 116 serait fréquemment en attente qu'un test se termine avant de pouvoir exécuter un autre algorithme pour un autre instrument.

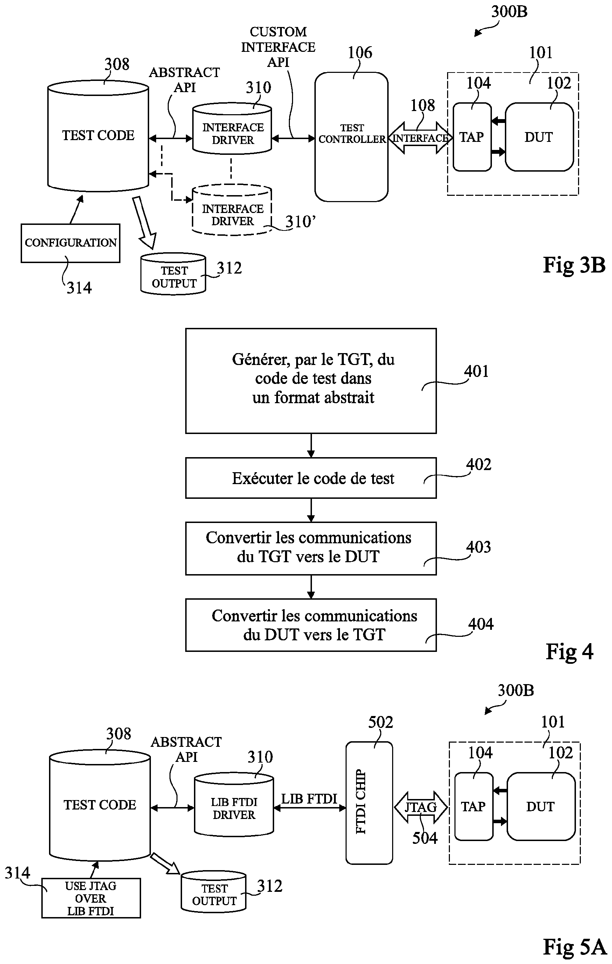

Les figures 3A et 3B illustrent schématiquement un appareil de test selon un mode de réalisation qui traite au moins certaines des difficultés décrites précédemment en relation avec l'appareil de test 100 de la figure 1. Certains éléments des figures 3A et 3B sont similaires à ceux de l'appareil de test 100 de la figure 1, et ces éléments portent les mêmes références numériques et ne seront pas décrits de nouveau en détail.

La figure 3A illustre schématiquement un module de génération et d'exécution de code de test 300A de l'appareil de test. Ce module 300A comprend un outil de génération de test (TGT) 302 qui est différent du TGT 116 de la figure 1 sous plusieurs aspects décrits plus en détail ci-après.

Comme le TGT 116 de la figure 1, le TGT 302 reçoit par exemple des fichiers DFT 118, une description de circuit 120, et des modèles de défauts 122, qui ne seront pas décrits de nouveau en détail.

Le TGT 302 comprend par exemple un ou plusieurs processeurs qui exécutent des instructions informatiques mémorisées dans une mémoire d'instructions (INSTR MEM) 304. Par exemple, l'exécution de ces instructions amène lesdits un ou plusieurs processeurs du TGT 302 à être configurés pour générer et exécuter un code de test (TEST CODE) 308 pour tester un DUT (non illustré en figure 3A). Le code de test comprend par exemple un ou plusieurs motifs de test et un ou plusieurs algorithmes de test à appliquer aux instruments du DUT. Dans un exemple, les motifs de test sont définis en utilisant le PDL niveau 0, et les algorithmes de test sont définis en utilisant le PDL niveau 1, et comprennent du code écrit dans un langage de haut niveau comme Tcl ou similaire. Cependant, le terme "code de test" est utilisé ici pour désigner non seulement du code comprenant les motifs de test et les algorithmes de test, mais aussi du code exécutable pour mettre en oeuvre le test, comme on va le décrire plus en détail ci-après.

Le code de test est par exemple dans un format qui est indépendant de l'interface entre le TGT 302 et le DUT. Par exemple, le TGT 302 comprend une mémoire mémorisant des données définissant une interface abstraite (ABSTRACT INTERFACE) 306, et en particulier un format abstrait à utiliser pour le code de test.

La figure 3B illustre schématiquement une portion 300B de l'appareil de test qui par exemple relie le TGT 302 au DUT 102. On supposera dans cet exemple que le code de test est exécuté par le TGT 302, en d'autres termes qu'un même dispositif génère et exécute le code de test. Cependant, dans des variantes de réalisation, on pourrait utiliser des dispositifs séparés pour générer et exécuter le code de test, l'exécution étant réalisée par un dispositif de test quelconque.

Comme cela est illustré en figure 3B, les communications vers le DUT 102 générées par l'exécution du code de test 308 sont par exemple fournies par l'intermédiaire d'une API abstraite (interface de programme d'application) à un pilote d'interface (INTERFACE DRIVER) 310. Comme cela est connu de l'homme de l'art, une API est une application qui fournit une interface entre un programme écrit dans un langage de haut niveau et des routines ou des fonctions qui exécutent les opérations souhaitées. Ces routines peuvent être mises en oeuvre dans le même langage ou dans un langage différent, et peuvent être contenues dans un package de modules précompilés sous forme de code exécutable ou de code objet.

Le pilote d'interface 310 convertit par exemple des communications du format abstrait utilisé par le code de test en un format approprié pour l'interface entre le TGT 302 et le DUT 102. De façon similaire, le pilote d'interface 310 convertit par exemple les communications provenant du DUT 102 dans le format abstrait utilisé par le TGT 302. Le pilote d'interface 310 est par exemple mis en oeuvre par un circuit séparé par rapport au TGT 302, bien que dans des variantes de réalisation les fonctions du pilote d'interface puissent être mises en oeuvre par du code exécuté par un ou plusieurs processeurs du TGT 302.

Le pilote d'interface 310 est couplé au contrôleur de test 106 par l'intermédiaire d'une interface API spécialisée, l'interface spécialisée dans l'exemple de la figure 3B étant par exemple une interface JTAG. Le contrôleur de test 106 est couplé au circuit intégré 101 par l'intermédiaire de l'interface 108. Comme dans la figure 1, le circuit intégré 101 comprend par exemple un TAP 104 pour s'interfacer avec le DUT 102, bien que dans des variantes de réalisation le TAP 104 puisse être une puce séparée du DUT 102.

L'exécution du code de test 308 par le TGT 302 provoque par exemple l'application de motifs de test et d'algorithmes de test au DUT 102 par le pilote d'interface 310 et le contrôleur de test 106, et des données renvoyées par le DUT 102 sont par exemple fournies en retour au TGT 302 afin qu'elles puissent être interprétées. En particulier, l'exécution d'un code de test entraîne la mise en oeuvre d'un algorithme de test, et peut provoquer la génération de données de sortie (TEST OUTPUT) 312.

Dans certains modes de réalisation, des informations de configuration (CONFIGURATION) 314 sont fournies au dispositif exécutant le code de test 308, et par exemple indiquent le type d'interface, permettant ainsi de sélectionner un pilote d'interface approprié pour servir pendant la phase de test. Par exemple, le dispositif de test comprend un ou plusieurs autres pilotes d'interfaces 310' pour piloter différents types d'interfaces, et le dispositif de test sélectionne un pilote d'interface 310, 310' approprié sur la base des informations de configuration 314.

Un avantage de fournir le code de test dans un format abstrait qui est indépendant de l'interface entre le TGT 302 et le DUT 102 est que l'exécution de ce code de test peut être relativement rapide vu que le format d'interface particulier n'a pas besoin d'être pris en compte par le TGT 302. En outre, les communications avec le DUT 102 sont gérées par le pilote d'interface 310, ce qui permet un fonctionnement en parallèle entre le TGT 302 et le pilote d'interface 310. Cela signifie que le TGT 302 n'est pas obligé d'attendre qu'une communication avec un instrument donné du DUT 102 soit reçue et traitée par le DUT 102 avant de continuer à exécuter le code de test concernant d'autres instruments du DUT 102.

Un procédé de test d'un DUT utilisant l'appareil de test des figures 3A et 3B va maintenant être décrit plus en détail en faisant référence à la figure 4.

La figure 4 est un organigramme illustrant des étapes dans un procédé de test d'un DUT selon un exemple de réalisation. Ce procédé est par exemple mis en oeuvre par le TGT 302 et le pilote d'interface 310 de l'appareil de test des figures 3A et 3B.

Dans une étape 401, le TGT 302 génère du code de test dans un format abstrait, qui est indépendant de l'interface reliant le TGT 302 au DUT 102. Le format abstrait est par exemple un format intermédiaire entre le format utilisé par le TGT 302 et le format utilisé par l'interface avec le DUT 302. Le code de test comprend par exemple un ou plusieurs motifs de test et un ou plusieurs algorithmes de test à appliquer à des instruments du DUT. La génération du code de test est par exemple basée sur un ou plusieurs éléments parmi les fichiers DFT 118, la description de circuit 120, et des modèles de défauts 122.

Dans une étape 402, le code de test est exécuté. Par exemple, le code de test comprend des motifs de test et des algorithmes de test enveloppés dans du code qui est exécutable par les processeurs du TGT 302, ou plus généralement par des processeurs de tout dispositif de test utilisé pour exécuter le code de test. Dans certains modes de réalisation, l'exécution du code de test implique l'application, en parallèle, d'une pluralité d'algorithmes de test à une pluralité correspondante d'instruments de test du DUT 102.

L'exécution du code de test implique aussi par exemple la construction d'un modèle de système de l'instrumentation de test du DUT 102, définissant les positions des instruments dans les chaînes d'analyse, et aussi le statut de l'instrumentation. Le statut de l'instrumentation comprend par exemple le statut des éléments dynamiques dans le DUT, comprenant des bits d'insertion de segments (SIB) et des multiplexeurs d'analyse. Ainsi le code de test lui-même ne comprend pas par exemple le modèle de système, qui est seulement généré pendant l'exécution du code de test.

Dans une étape 403, pendant l'exécution du code de test, les communications à partir du TGT 302 vers le DUT 102 sont converties par le pilote d'interface 310 en un format adapté à l'interface particulière entre le TGT 302 et le DUT 102. Ces communications comprennent par exemple un ou plusieurs motifs de test à appliquer à des instruments du DUT 102, et un ou plusieurs algorithmes de test à appliquer à des instruments du DUT 102.

Dans une étape 404, les communications à partir du DUT 102 vers le TGT 302 sont converties par le pilote d'interface 310 dans le format intermédiaire afin qu'elles puissent être traitées par le TGT 302. Ces communications comprennent par exemple des motifs de test de sortie du DUT 102. Ces communications sont par exemple utilisées pour mettre à jour le statut de l'instrumentation de test dans le modèle de système, qui peut ensuite être utilisé pour générer d'autres motifs de test.

Des exemples d'interfaces particulières entre le TGT 302 et le DUT 102 vont maintenant être décrits plus en détail en faisant référence aux figures 5A à 5D.

La figure 5A illustre schématiquement la portion 300B selon un exemple de réalisation dans lequel l'interface entre le TGT 302 et le DUT 102 est assurée par une puce FTDI (Future Technology Devices International Ltd) (FTDI CHIP) 502, qui convertit par exemple une interface USB (bus série universel) en l'interface JTAG (JTAG) 504. Dans ce mode de réalisation, le pilote d'interface 310 comprend par exemple un pilote LibFTDI (LIB FTDI DRIVER), qui est par exemple du code de bas niveau utilisé pour contrôler la puce FTDI 502, et les informations de configuration 314 identifient par exemple ce pilote LibFTDI afin qu'il puisse être sélectionné pour la conversion.

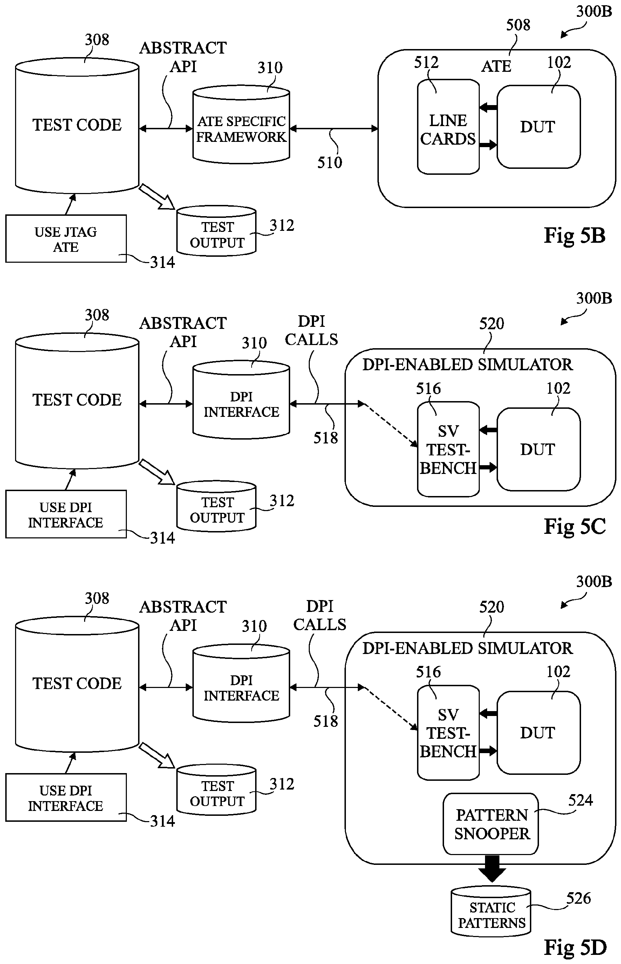

La figure 5B illustre schématiquement la portion 300B de l'appareil de test selon une variante de réalisation par rapport à la figure 5A dans laquelle le DUT 102 est accédé par l'intermédiaire d'un Équipement de Test Automatisé (ATE) 508, comme cela est couramment utilisé dans la fabrication. Dans un tel cas, l'interface entre le TGT 302 et le DUT 102 est par exemple mise en oeuvre par une interface à haute vitesse 510, par exemple une interface par fibre optique, contrôlée par un pilote d'interface 310 comprenant un cadre de travail spécifique à l'ATE (ATE SPECIFIC FRAMEWORK) communiquant avec des cartes de ligne (LINE CARDS) 512, qui sont responsables de l'interface physique avec le DUT 102.

La figure 5C illustre schématiquement la portion 300B de l'appareil de test selon une variante de réalisation par rapport aux figures 5A et 5B dans laquelle le DUT est simulé. Dans ce cas, le DUT 102 est par exemple mis en oeuvre en utilisant un langage de description de matériel, comme le langage VHDL (VHSIC (Very High-Speed Integrated Circuit) Hardware Design Language) ou Verilog, et la simulation est contrôlée par un banc de test de haut niveau SV VERILOG 516. Dans cet exemple, le banc de test est mis en oeuvre en utilisant le HDL SystemVerilog (SV). L'interface entre le TGT 302 et le DUT 102 se fait par l'intermédiaire d'une interface de programmation directe, DPI (Direct Programming Interface), mettant en oeuvre le pilote d'interface 310, et par des appels DPI 518, et le DUT 102 est accédé en utilisant un simulateur à capacité DPI (DPI-ENABLE SIMULATOR) 520 comprenant le banc de test SV (SV TESTBENCH) 516.

La figure 5D illustre schématiquement la portion 300B de l'appareil de test selon un mode de réalisation similaire à celui de la figure 5C, dans lequel le simulateur à capacité DPI 520 comprend en outre un espion de motifs (PATTERN SNOOPER) 524. L'espion de motifs 524 permet par exemple d'extraire des motifs statiques (STATIC PATTERNS) 526 du DUT 102 et de les déposer dans un format connu. L'intérêt d'un tel mode de réalisation est que le fonctionnement devient similaire à celui d'un système de génération automatique de motifs de test ATPG (Automatic Test Pattern Génération) classique, et ainsi le dispositif de test de la figure 5D est rétro-compatible. Plutôt que d'utiliser un simulateur à capacité DPI 520, ce mode de réalisation pourrait être mis en oeuvre en utilisant une émulation, sans le simulateur, pour fournir un motif sans éléments temporels avec un effort de calcul plus faible.

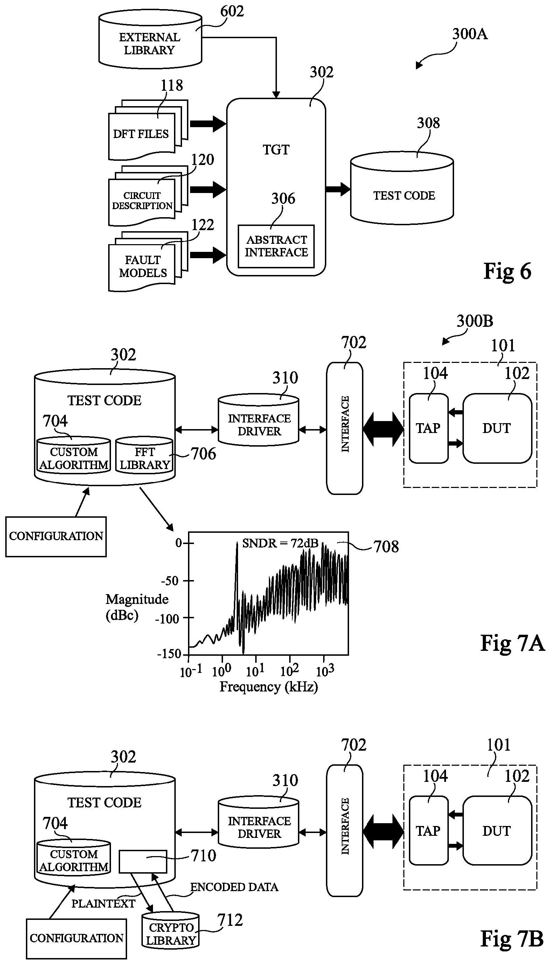

Un avantage du dispositif de test décrit ici est qu'il devient possible d'appliquer, en utilisant le TGT 302, des algorithmes de test relativement complexes pour tester des circuits spécifiques du DUT 102. Par exemple, dans le passé, le test de circuits mettant en oeuvre des fonctions complexes comme la fonction de transformation de Fourier rapide (FFT), ou des fonctions cryptographiques, nécessitait utilisation d'un autotest intégré, BIST (Built-In Self-Test) dédié, consommant une précieuse surface de la puce. Le TGT 302 est par exemple capable de générer du code de test qui comprend du code mettant en oeuvre de tels algorithmes de test complexes, ou qui comprend des appels de fonction à des librairies mémorisant le code pour exécuter de tels algorithmes de test complexes, comme on va le décrire maintenant en faisant référence aux figures 6, 7A et 7B.

La figure 6 illustre le module de génération et d'exécution de code de test 300A selon un autre exemple de réalisation similaire à celui de la figure 3A mais dans lequel il comprend en plus une librairie externe (EXTERNAL LIBRARY) 602 couplée au TGT 302. Cette librairie externe 602 mémorise par exemple des algorithmes de test complexes qui peuvent être appliqués à des instruments du DUT.

La figure 7A illustre schématiquement un exemple dans lequel le DUT 102 comprend un circuit FFT mettant en oeuvre la fonction FFT (non illustré), et comprend une instrumentation fournissant une interface de test avec ce circuit FFT. La librairie externe 602 de la figure 6 comprend par exemple une librairie FFT définissant des séquences de test pour tester la fonction FFT et valider la réponse en sortie. Un algorithme spécialisé (CUSTOM ALGORITHM) 704 est par exemple incorporé dans le code de test 308 pour mettre en oeuvre l'algorithme de test complexe de la FFT. En outre, la librairie FFT 706 est par exemple incorporée dans le code de test pour être accessible pendant la phase de test. Comme cela est représenté, la sortie de données brutes du circuit FFT du DUT 102 peut fournir une forme d'onde complexe 708 indiquant dans cet exemple l'amplitude du signal de sortie en fonction de la fréquence du signal d'entrée, et l'algorithme spécialisé 704 et la librairie 706 peuvent permettre qu'une telle forme d'onde soit validée par le TGT 302.

La figure 7B illustre schématiquement un autre exemple dans lequel le DUT 102 comprend un circuit cryptographique mettant en oeuvre une fonction cryptographique (non illustré), et comprend une instrumentation fournissant une interface de test avec ce circuit cryptographique. Dans un tel cas, la librairie externe 602 de la figure 6 comprend par exemple une librairie cryptographique. En plus d'un algorithme spécialisé 704, le code de test 308 de la figure 7B comprend par exemple un appel de fonction 710 à la librairie cryptographique 712 afin de permettre à la fonction cryptographique d'être exécutée, et par cela de permettre de vérifier le fonctionnement correct du circuit cryptographique. En particulier, la librairie cryptographique reçoit par exemple du texte simple par l'appel de fonction 710, et renvoie des données codées à l'appel de fonction 710. À la place ou en plus, la librairie cryptographique 712 pourrait réaliser une opération de déchiffrement, et pourrait recevoir des données chiffrées à partir de l'appel de fonction 710, et renvoyer du texte simple à l'appel de fonction 710.

Bien qu'on ait décrit au moins un mode de réalisation illustratif, diverses altérations, modifications et améliorations apparaîtront facilement à l'homme de l'art. Par exemple, il apparaîtra clairement à l'homme de l'art que, bien qu'on ait décrit des modes de réalisation dans lesquels le TGT génère et exécute le code de test, dans d'autres mises en oeuvre l'exécution d'un code de test pourrait être réalisée par un dispositif séparé du TGT.

En outre, il apparaîtra clairement à l'homme de l'art que bien qu'on ait décrit certains exemples d'algorithmes de test complexes pour tester un circuit FFT, les mêmes principes pourraient être appliqués à d'autres types de circuits à tester, comme tout algorithme de traitement de signal ou de données, ou tout circuit analogique, comme un convertisseur analogique-numérique.

## Revendications

1. Appareil de test pour tester un dispositif sous test (102), l'appareil comprenant :
un dispositif de test (302) comportant une mémoire (304) mémorisant des instructions informatiques et un ou plusieurs processeurs agencés, lors de l'exécution des instructions informatiques :
- pour exécuter du code de test (308) pour mettre en oeuvre une opération de test sur le dispositif sous test (102), le code de test (308) définissant un ou plusieurs motifs de test et un ou plusieurs algorithmes de test à appliquer à des instruments de test du dispositif sous test, le code de test étant dans un premier format qui est indépendant de l'interface de test (106, 108) entre le dispositif de test (302) et le dispositif sous test (102) ; et
un pilote d'interface (310) couplé au dispositif sous test (102) et agencé pour convertir des communications générées par le dispositif de test pendant l'exécution du code de test dans un deuxième format adapté à l'interface de test, et pour convertir des communications provenant du dispositif sous test (102) dans le premier format.

2. Appareil de test selon la revendication 1, comprenant une pluralité de pilotes d'interface (310, 310') mis en oeuvre par lesdits un ou plusieurs processeurs du dispositif de test ou par un autre dispositif, dans lequel le dispositif de test est agencé pour sélectionner l'un de la pluralité de pilotes d'interface pour réaliser la conversion.

3. Appareil de test selon la revendication 1 ou 2, dans lequel lesdits un ou plusieurs processeurs du dispositif de test, ou un ou plusieurs autres processeurs d'un outil de génération de test, sont agencés pour générer le code de test avant l'exécution du code de test par le dispositif de test.

4. Appareil de test selon l'une quelconque des revendications 1 à 3, comprenant en outre l'interface de test (106, 108) couplant le pilote d'interface (310) au dispositif sous test (102) .

5. Appareil de test selon l'une quelconque des revendications 1 à 4, dans lequel le dispositif de test (302) est agencé pour réaliser une exécution en parallèle d'un premier algorithme de test appliqué à un premier des instruments de test et un deuxième algorithme de test appliqué à un deuxième des instruments de test.

6. Appareil de test selon l'une quelconque des revendications 1 à 5, dans lequel lesdits un ou plusieurs processeurs du dispositif de test (302) sont en outre agencés pour accéder à une librairie externe (602) définissant un ou plusieurs autres algorithmes de test pour tester un sous-circuit du dispositif sous test.

7. Appareil de test selon la revendication 6, dans lequel lesdits un ou plusieurs processeurs du dispositif de test (302) sont agencés pour générer le code de test en incorporant la librairie externe (602) dans le code de test et/ou en incorporant dans le code de test un appel de fonction auxdits un ou plusieurs autres algorithmes de test.

8. Appareil de test selon la revendication 6 ou 7, dans lequel le sous-circuit met en oeuvre une fonction de traitement de signal ou de données, et dans lequel lesdits un ou plusieurs autres algorithmes de test sont agencés pour vérifier un comportement attendu de la fonction de traitement de signal ou de données.

9. Appareil de test selon la revendication 6 ou 7, dans lequel le sous-circuit met en oeuvre une fonction cryptographique, et dans lequel lesdits un ou plusieurs autres algorithmes de test sont agencés pour assurer des opérations de chiffrement et/ou de déchiffrement afin de permettre à l'outil de génération de test (302) de vérifier le comportement de la fonction cryptographique.

10. Système de test comprenant :
l'appareil de test de l'une quelconque des revendications 1 à 9 ; et
le dispositif sous test (102) couplé à l'appareil de test, le dispositif sous test comprenant un port d'accès de test (104) et une pluralité d'instruments de test (202 à 216), chaque instrument de test comprenant un ou plusieurs registres d'analyse.

11. Procédé de test d'un dispositif sous test (102), le procédé comprenant :
exécuter, par un dispositif de test (302) comportant une mémoire (304) mémorisant des instructions informatiques et un ou plusieurs processeurs agencés, du code de test (308) pour mettre en oeuvre une opération de test sur le dispositif sous test (102), le code de test (308) définissant un ou plusieurs motifs de test et un ou plusieurs algorithmes de test à appliquer aux instruments de test du dispositif sous test (102), le code de test étant dans un premier format qui est indépendant de l'interface de test (106, 108) entre l'outil de génération de test (302) et le dispositif sous test (102) ; et
pendant l'opération de test :
- convertir des communications générées par l'exécution du code de test et destinées au dispositif sous test (102) dans un deuxième format adapté à l'interface de test ; et
- convertir des communications provenant du dispositif sous test (102) dans le premier format.

12. Procédé selon la revendication 11, comprenant en outre, avant l'exécution du code de test, la génération du code de test (308) par le dispositif de test (302), ou par un ou plusieurs autres processeurs d'un outil de génération de test.

13. Procédé selon la revendication 11 ou 12, comprenant en outre la mise en oeuvre par lesdits un ou plusieurs processeurs du dispositif de test, et la sélection, par le dispositif de test (302), de l'un d'une pluralité de pilotes d'interface (310, 310') pour réaliser les conversions.

14. Procédé selon l'une quelconque des revendications 11 à 13, comprenant en outre la réalisation par le dispositif de test (302) d'une exécution en parallèle d'un premier algorithme de test appliqué à un premier des instruments de test et d'un deuxième algorithme de test appliqué à un deuxième des instruments de test.

## Patentansprüche

1. - Testgerät zum Testen einer zu testenden Vorrichtung (102), wobei das Gerät umfasst:
eine Testvorrichtung (302), die einen Speicher (304) aufweist, der Computerbefehle speichert, und einen oder mehrere Prozessoren, die eingerichtet sind, um bei der Ausführung der Computerbefehle:
- einen Testcode (308) auszuführen, um eine Testoperation an der zu testenden Vorrichtung (102) durchzuführen, wobei der Testcode (308) ein oder mehrere Testmotive und einen oder mehrere Testalgorithmen definiert, die auf Testinstrumente der zu testenden Vorrichtung anzuwenden sind, wobei der Testcode in einem ersten Format ist, das von der Testschnittstelle (106, 108) zwischen der Testvorrichtung (302) und der zu testenden Vorrichtung (102) unabhängig ist; und
einen Schnittstellentreiber (310), der an die zu testende Vorrichtung (102) gekoppelt und eingerichtet ist, um Kommunikationen, die von der Testvorrichtung während der Ausführung des Testcodes erzeugt werden, in ein zweites Format umzuwandeln, das an die Testschnittstelle angepasst ist, und um Kommunikationen, die von der zu testenden Vorrichtung (102) kommen, in das erste Format umzuwandeln.

2. - Testgerät nach Anspruch 1, umfassend eine Vielzahl von Schnittstellentreibern (310, 310'), die von dem einen oder mehreren Prozessoren der Testvorrichtung oder von einer anderen Vorrichtung umgesetzt werden, wobei die Testvorrichtung eingerichtet ist, um von der Vielzahl von Schnittstellentreibern einen für die Durchführung der Umwandlung auszuwählen.

3. - Testgerät nach Anspruch 1 oder 2, wobei der eine oder mehrere Prozessoren der Testvorrichtung oder einer oder mehrere andere Prozessoren eines Testerzeugungswerkzeugs eingerichtet sind, um den Testcode vor der Ausführung des Testcodes durch die Testvorrichtung zu erzeugen.

4. - Testgerät nach einem der Ansprüche 1 bis 3, umfassend ferner die Testschnittstelle (106, 108), die den Schnittstellentreiber (310) an die zu testende Vorrichtung (102) koppelt.

5. - Testgerät nach einem der Ansprüche 1 bis 4, wobei die Testvorrichtung (302) eingerichtet ist, um eine parallele Ausführung eines ersten Testalgorithmus durchzuführen, der auf ein erstes der Testinstrumente angewendet wird, und eines zweiten Testalgorithmus, der auf ein zweites der Testinstrumente angewendet wird.

6. - Testgerät nach einem der Ansprüche 1 bis 5, wobei der eine oder mehrere Prozessoren der Testvorrichtung (302) ferner eingerichtet sind, um auf eine externe Library (602) zuzugreifen, die einen oder mehrere andere Testalgorithmen definiert, um eine Teilschaltung der zu testenden Vorrichtung zu testen.

7. - Testgerät nach Anspruch 6, wobei der eine oder mehrere Prozessoren der Testvorrichtung (302) eingerichtet sind, um den Testcode durch Inkorporieren der externen Library (602) in den Testcode und/oder durch Inkorporieren eines Funktionsaufrufs an einen oder mehrere andere Testalgorithmen in den Testcode zu erzeugen.

8. - Testgerät nach Anspruch 6 oder 7, wobei die Teilschaltung eine Signal- oder Datenverarbeitungsfunktion umsetzt und wobei der eine oder mehrere andere Testalgorithmen eingerichtet sind, um ein erwartetes Verhalten der Signal- oder Datenverarbeitungsfunktion zu verifizieren.

9. - Testgerät nach Anspruch 6 oder 7, wobei die Teilschaltung eine kryptografische Funktion umsetzt und wobei der eine oder mehrere andere Testalgorithmen eingerichtet sind, um Chiffrier- und/oder Dechiffrieroperationen sicherzustellen, um dem Testerzeugungswerkzeug (302) zu gestatten, das Verhalten der kryptografischen Funktion zu verifizieren.

10. - Testsystem, umfassend:
das Testgerät nach einem der Ansprüche 1 bis 9; und
die an das Testgerät gekoppelte zu testende Vorrichtung (102), wobei die zu testende Vorrichtung einen Testzugangsport (104) und eine Vielzahl von Testinstrumenten (202 bis 216) umfasst, wobei jedes Testinstrument ein oder mehrere Analyseregister umfasst.

11. - Testverfahren einer zu testenden Vorrichtung (102), wobei das Verfahren umfasst:
Ausführen eines Testcodes (308) durch eine Testvorrichtung (302), die einen Speicher (304) aufweist, der Computerbefehle speichert, und einen oder mehrere Prozessoren, die eingerichtet sind, um eine Testoperation auf der zu testenden Vorrichtung (102) durchzuführen, wobei der Testcode (308) ein oder mehrere Testmotive und einen oder mehrere Testalgorithmen definiert, die auf die Testinstrumente der zu testenden Vorrichtung (102) anzuwenden sind, wobei der Testcode in einem ersten Format ist, das von der Testschnittstelle (106, 108) zwischen dem Testerzeugungswerkzeug (302) und der zu testenden Vorrichtung (102) unabhängig ist; und
während der Testphase:
- Umwandeln der Kommunikationen, die durch die Ausführung des Testcodes erzeugt wurden und für die zu testende Vorrichtung (102) bestimmt sind, in ein zweites Format, das an die Testschnittstelle angepasst ist, und
- Umwandeln der Kommunikationen, die von der zu testenden Vorrichtung (102) kommen, in das erste Format.

12. - Verfahren nach Anspruch 11, umfassend ferner vor der Ausführung des Testcodes die Erzeugung des Testcodes (308) durch die Testvorrichtung (302) oder durch einen oder mehrere andere Prozessoren eines Testerzeugungswerkzeugs.

13. - Verfahren nach Anspruch 11 oder 12, umfassend ferner die Umsetzung durch den einen oder mehrere Prozessoren der Testvorrichtung und die Auswahl durch die Testvorrichtung (302) von einem von einer Vielzahl von Schnittstellentreibern (310, 310'), um die Umwandlungen durchzuführen.

14. - Verfahren nach einem der Ansprüche 11 bis 13, umfassend ferner die Durchführung einer parallelen Ausführung eines ersten Testalgorithmus, der auf ein erstes der Testinstrumente angewendete wird, und eines zweiten Testalgorithmus, der auf ein zweites der Testinstrumente angewendet wird, durch die Testvorrichtung (302).

## Claims

1. - Test apparatus for testing a device being tested (102), the apparatus comprising:
a test device (302) comprising a memory (304) for storing data processing instructions and one or more processors arranged, when the data processing instructions are executed:
- to execute test code (308) in order to implement a test operation on the device being tested (102), the test code (308) defining one or more test patterns and one or more test algorithms to be applied to test instruments the device being tested, the test code being in a first format that is independent of the test interface (106, 108) between the test device (302) and the device being tested (102); and
an interface controller (310) coupled to the device being tested (102) and arranged to convert communications generated by the test device during the execution of the test code into a second format suitable for the test interface, and to convert communications from the device being tested (102) into the first format.

2. - Test apparatus according to claim 1, comprising a plurality of interface controllers (310, 310') implemented by said one or more processors of the test device or by another device, wherein the test device is arranged to select one from the plurality of interface controllers in order to carry out the conversion.

3. - Test apparatus according to claim 1 or 2, wherein said one or more processors of the test device, or one or more other processors of a test generation tool, are arranged to generate the test code before the execution of the test code by the test device.

4. - Test apparatus according to any of claims 1 to 3, further comprising the test interface (106, 108) coupling the interface controller (310) to the device being tested (102).

5. - Test apparatus according to any of claims 1 to 4, wherein the test device (302) is arranged to carry out an execution in parallel of a first test algorithm applied to a first of the test instruments and a second test algorithm applied to a second of the test instruments.

6. - Test apparatus according to any of claims 1 to 5, wherein said one or more processors of the test device (302) are further arranged to access an external library (602) defining one or more other test algorithms for testing a sub-circuit of the device being tested.

7. - Test apparatus according to claim 6, wherein said one or more processors of the test device (302) are arranged to generate the test code by incorporating the external library (602) into the test code and/or by incorporating into the test code a function call to said one or more other test algorithms.

8. - Test apparatus according to claim 6 or 7, wherein the sub-circuit implements a data or signal processing function, and wherein said one or more other test algorithms are arranged to verify an expected behaviour of the data or signal processing function.

9. - Test apparatus according to claim 6 or 7, wherein the sub-circuit implements a cryptographic function, and wherein said one or more other test algorithms are arranged to provide encryption and/or decryption operations so as to allow the test generation tool (302) to verify the behaviour of the cryptographic function.

10. - Test system comprising:
the test apparatus of any of claims 1 to 9; and
the device being tested (102) coupled to the test apparatus, the device being tested comprising a test access port (104) and a plurality of test instruments (202 to 216), with each test instrument comprising one or more analysis registers.

11. - Method for testing a device being tested (102), the method comprising:
executing, by a test device (302) comprising a memory (304) for storing data processing instructions and one or more processors arranged, the test code (308) in order to implement a test operation on the device being tested (102), the test code (308) defining one or more test patterns and one or more test algorithms to be applied to the test instruments of the device being tested (102), the test code being in a first format that is independent of the test interface (106, 108) between the test generation tool (302) and the device being tested (102); and
during the test operation:
- converting communications generated by the execution of the test code and intended for the device being tested (102) into a second format adapted to the test interface; and
- converting communications coming from the device being tested (102) into the first format.

12. - Method according to claim 11, further comprising, before the execution of the test code, the generating of the test code (308) by the test device (302), or by one or more other processors of a test generation tool.

13. - Method according to claim 11 or 12, further comprising the implementation by said one or more processors of the test device, and the selection, by the test device (302), of one from a plurality of interface controllers (310, 310') in order to carry out the conversions.

14. - Method according to any of claims 11 to 13, further comprising the carrying out by the test device (302) of an execution in parallel of a first test algorithm applied to a first of the test instruments and of a second test algorithm applied to a second of the test instruments.
